# EUROPEAN PATENT SPECIFICATION

(11) **EP 2 864 630 B1**
(45) Date of publication and mention of the grant of the patent: **09.08.2017**
(21) Application number: 11726516.5
(22) Date of filing: 03.05.2011
(51) Int. Cl.: F03D 9/14, F03D 9/17, F03D 9/00, F03D 9/10

(54) **HYDRO/AERO POWER PLANT**
WASSER-/WINDKRAFTWERK
CENTRALE ÉLECTRIQUE HYDRO-ÉOLIENNE

(30) Priority: 04.05.2010 PL 39114510
(43) Date of publication of application: 29.04.2015
(73) Proprietor: Piskorz, Waldemar, 21-509 Koden (PL)
(72) Inventor: Piskorz, Waldemar, 21-509 Koden (PL)
(74) Representative: Belz, Anna
(86) International application number: PCT/PL2011/050013
(87) International publication number: WO 2011/139171

(56) References cited:
- EP-A1- 0 167 694
- EP-A1- 1 637 733
- WO-A1-2008/106861

## Description

The invention relates to a hydro/aero power plant using the potential energy of water.

The specification of application CN 201246283 discloses a system for converting wind energy into water energy. The system consists of a pool, a water pump driven by a wind rotor, a high pressure water tank, a water turbine and an electric generator. The water pump, driven by a shaft coupled with the wind rotor through a gear, transfers water to the high pressure tank. The high pressure tank has an outlet opening connected via a pipe to the turbine. Water discharged from the turbine flows into the pool.

From publication FP 0167694 a hydro/aero plant is known, which is equipped with water (fluid or oil) turbine connected to generators of electricity, comprising a lower and upper fluid tank connected with a pipeline having a pump installed, where said pump's impeller being coupled with a wind power generator.

The power plant according to the present invention comprises at least two upper water tanks whose outlet opening are connected to the bottom of a manifold and at least one water turbine connected to a power generating device. Installed within the bottom of each upper tank are elastic air cushions equipped with decompression means. The cushions have siphons with check valves to suck air, said siphons connected to the atmosphere, and a second conduit with a check valve connected, via a compressed air system, to a compressed air tank.

The wind power plant comprises a column made of at least two segments, each wind column segment comprising a vertical axis water turbine. The axles of the wind rotors have at their ends half-couplings to connect the axles with each other and with a power transmission shaft.

In case of large water level difference (head) between the upper tanks and the lower tank an intermediate tank is installed, one side of which is connected through the lower section of the pipeline to a pump located in the lower tank, and the other side of the intermediate tank is connected, via the top section of the pipeline, to a manifold which feeds water to the upper tanks, whereas the top section of the pipeline is supplied by the pump, and each of the pumps is coupled by way of the power transmission shaft with a separate wind power plant. The manifold, which feeds water, is equipped with pipe stubs with solenoid valves located above each of the upper tanks. The upper tanks are equipped with at least two sensors for the maximum and the minimum water level.

Installed on the transmission shaft is an electrically controlled coupling that connects the power transmission shaft via a gear, compressor, a compressed air tank and an air turbine with a power generator.

Where the terrain conditions allow, a retention tank is installed above the upper tanks, said tank provided with discharge pipes located above the upper tanks, equipped with solenoid valves connected to water level sensors located in the upper tanks.

The power plant can operate in continuous mode since it is able to store energy in form of water and compressed air. In the absence of sufficiently strong wind, water stored in the upper tanks feeds the water turbine. When wind power exceeds the power needed to pump water into the upper tanks, excess wind energy is used to fill the compressed air tank intended for electricity production when there is deficit of water in the upper tanks. This solution allows for dual utilization of the potential energy of water: once as water column pressure on the air cushions, and the other time in the form of kinetic energy that drives the turbines.

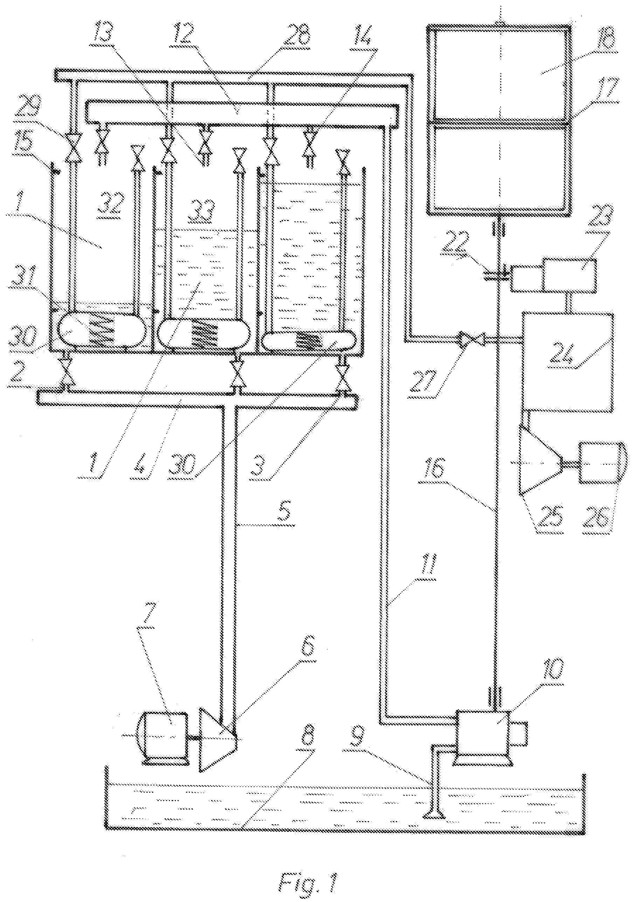

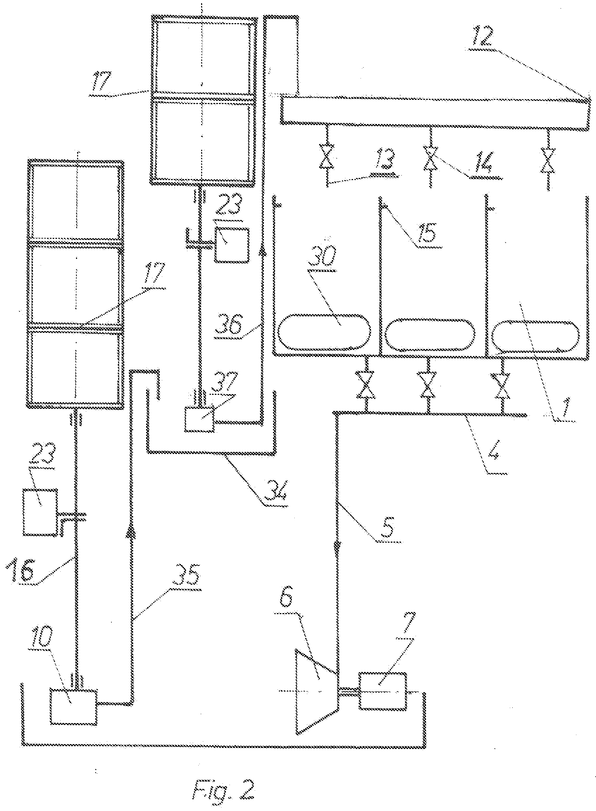

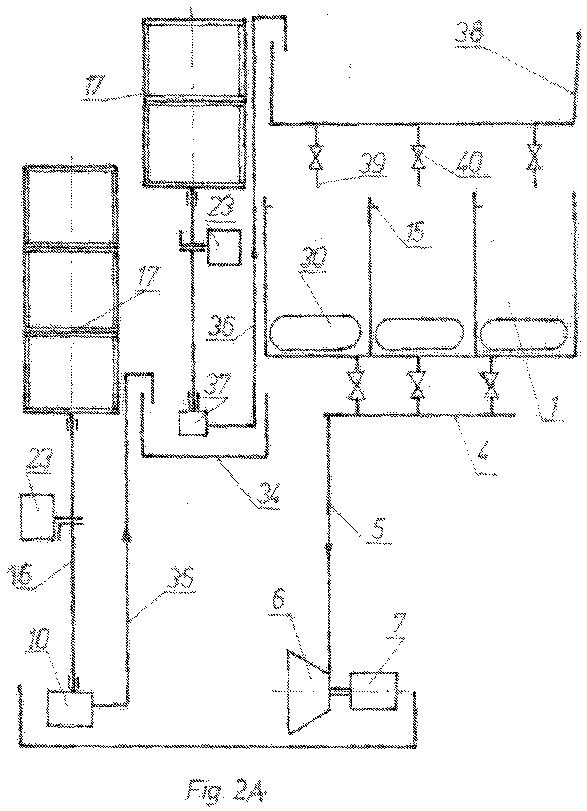

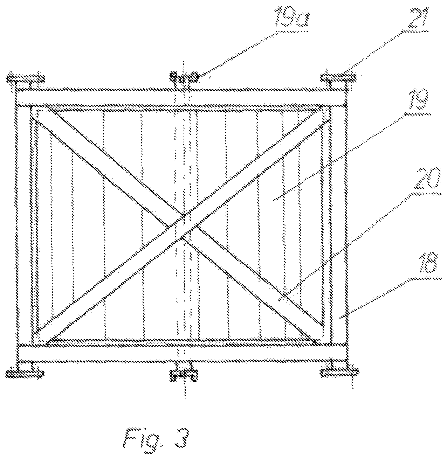

The invention is shown in an exemplary embodiment in the attached drawing, where Fig. 1 shows a schematic arrangement of the power plant components, Figure 2 is a simplified diagram of the power plant with an intermediate water tank, without the air plant, and Fig.2A is a simplified diagram of the power plant with a retention tank, and Fig. 3 shows a segment of the wind column.

Three top water tanks **1** have discharge pipes **2** in their bottoms, with solenoid valves **3,** connected to manifold **4** to which a downcomer conduit **5** is attached which supplies water to a water turbine **6** coupled with a power generator **7.** Located below the water turbine **6** is the lower tank **8,** into which an intake pipe **9** of pump **10** is introduced. Pump **10** is connected, through pipeline **11,** to a top manifold **12** which supplies water through pipes **13** to each of the upper tanks **1.** Pipe stubs **13** are equipped with solenoid valves **14,** controlled by at least two sensors **15** placed in the upper tanks **1,** which set the minimum and the maximum water levels.

### EXAMPLE 1 (basic)

Pump **10** is driven by a transmission shaft **16** of the wind power plant, said shaft being a segmented column **17** assembled from two segments **18** each provided with a vertical axis wind turbine **19,** said shaft's axle having on its ends half-couplings **19a** which enable assembling and connecting of the segments **18.** The skeleton **20** of a segment is a truss structure, having feet **21** for connecting individual segments **18.**

The transmission shaft **16** has an electrically controlled coupling **22** which couples, alternately or jointly, the pump **10** and an air compressor **23.** The air compressor **23** is connected through the compressed air tank **24** and air turbine **25** to a power generator **26.** The compressed air tank **24** is connected, through a check valve **27,** to an air system **28,** connected to which are, through check valves **29,** air cushions **30** installed at the bottoms of the upper tanks **1.** The air cushions **30** have coatings made of an elastic material. The air cushions **30** are equipped with decompression means **31.** The internal space of the air cushions **30** is connected to the atmosphere via siphons **32** with check valves **33.**

The pump **10,** driven by the wind power plant by way of a transmission shaft **16,** feeds water to the manifold **12** which has pipe stubs **13** located above the upper tanks **1,** through which pipe stubs water is poured into each of the upper tanks **1.** As soon as one tank **1** is full, a solenoid valve **14** controlled by the maximum level sensor **15** of the first tank **1** shuts the flow from that pipe stub and, at the same time, a solenoid valve **14** opens at the next upper tank **1.** The upper tanks **1** filling cycle sequence is repeated and ceases in case of no wind. Water column in upper tank **1** presses onto an air cushion **30** which flattens and thus air is pushed out from the inside of the cushion **30.** By water pressure, compressed air is fed through a check valve **27** to a compressed air tank **24,** and air forced out of therefrom drives an air turbine **25,** to which a power generator **26** is connected. When water column pressure in the upper tank **1** is low, the air cushion **30** increases its volume by the action of decompression means **31,** the cushion being filled through a siphon **32** with atmospheric air.

Water flows out from the filled tank **1** until the low level is reached, signalled by sensor **15** whose signal closes the solenoid valve **3** that shuts water flow from that upper tank **1,** and opens a solenoid valve **3** of the next upper tank **1** where currently water level is the highest.

When the hydro/aero power plant produces a surplus power, a compressor **23** is started using a coupling **22,** to feed the compressed air tank **24.** The compressed air stored is available for use in need to produce electric energy.

The filling and emptying sequence order for the upper tanks **1,** as well as switching on/off the coupling **22,** are controlled by electric systems not shown in the drawing. EXAMPLE 2 (large head)

If, due to terrain conditions, there is a large difference (head) between the levels in the upper tanks **1** and the level in the lower tank **8,** it is preferred to install an intermediate tank **34** connected on one side, through the lower section of pipeline **35,** to the pump **10,** and on the other side through the upper section of pipeline **36** to the top manifold **12** that feeds water to the upper tanks **1.** The top section of pipeline **36** has a separate pump **37,** and each of the pumps **10** and **37** is connected via a transmission shaft **16** to an individual segmented column **17.**

### EXAMPLE 3

In particularly preferred conditions, a retention tank **38** is placed above the upper tanks **1,** said retention tank having discharge pipes **39** with electrically controlled valves **40,** whose outlets are located above the upper tanks **1.**

List of numerals used in the drawing:
- 1: - upper tank
- 2: - discharge pipe
- 3: - solenoid valve
- 4: - bottom manifold
- 5: - downcomer conduit
- 6: - water turbine
- 7: - power generating device
- 8: - lower tank
- 9: - intake pipe
- 10: - pump
- 11: - pipeline
- 12: - top manifold
- 13: - pipe stub
- 14: - solenoid valve
- 15: - sensor
- 16: - transmission shaft
- 17: - segmented column
- 18: - segment
- 19: - wind turbine
- 19a: - half coupling
- 20: - skeleton
- 21: - foot
- 22: - electric coupling
- 23: - compressor
- 24: - compressed air tank
- 25: - air turbine
- 26: - power generator
- 27: - check valve
- 28: - air system
- 29: - check valve
- 30: - air cushion
- 31: - decompression means
- 32: - siphon
- 33: - check valve
- 34: - intermediate tank
- 35: - lower section of the pipeline
- 36: - upper section of the pipeline
- 37: - pump
- 38: - retention tank
- 39: - discharge pipes
- 40: - valves

## Claims

1. A hydro/aero power plant equipped with water turbines connected to generators of electricity, comprising a lower and an upper water tank connected with a pipeline having a pump installed, said pump's impeller being coupled with a wind power generator, **characterised in that** it comprises at least two upper tanks **(1)** connected with a manifold **(4)** and at least one water turbine **(6)** connected to a power generating device **(7),** and in the bottom part of said upper tanks **(1)** air cushions **(30)** are located, said cushions connected through an air system **(28)** to an air tank **(24),** whereas the wind power plant is composed of at least two segmented columns **(17),** each assembled from at least two segments **(18),** whereas transmission shafts **(16)** of said columns **(17)** are connected to pumps **(10)** connected to the lower tank **(8).**

2. A hydro/aero power plant according to claim 1, **characterized in that** each segment **(18)** of a column **(17)** having a truss structure for connecting the segments to each other, has a vertical axis wind turbine **(19).**

3. A hydro/aero power plant according to claim 2, **characterized in that** the axles of the rotors of the wind turbines **(19)** comprise at their ends half-couplings **(19a).**

4. A hydro/aero power plant according to claim 1, **characterized in that** an air compressor **(23)** is connected to a transmission shaft **(16)** by way of an electrically controlled coupling **(22),** said compressor's outlet connected via an air tank **(24)** and an air turbine **(25)** to a power generator **(26).**

5. A hydro/aero power plant according to claim 1, **characterized in that** the upper tanks **(1)** are equipped with at least two water level sensors **(15).**

6. A hydro/aero power plant according to claim 1, **characterized in that** between the upper tanks **(1)** and the lower tank **(8)** an intermediate tank **(34)** is located, which is connected on one side, through a section of a water supply pipeline **(35),** to a pump **(10)** located in the lower tank **(8),** and on the other side said intermediate tank **(34) -** through a pump **(37)** and a section of pipeline **(36) -** is connected to a manifold **(12),** placed above the upper tanks **(1).**

7. A hydro/aero power plant according to claim 5, **characterized in that** the manifold **(12)** comprises pipe stubs **(13)** situated above each upper tank **(1).**

8. A hydro/aero power plant according to claim 5, **characterized in that** solenoid valves **(14)** are installed at pipe stubs **(13),** said valves coupled with water level sensors **(15).**

9. A hydro/aero power plant according to claim 5, **characterised in that** the upper tanks **(1)** are connected to a manifold **(12)** that supplies water to a downcomer conduit **(5)** through which a water turbine **(6)** is supplied, whereas the sequence order and the time of filling of the upper tanks are controlled by sensors **(15)** whose outputs are connected to the solenoid valves **(3).**

10. A hydro/aero power plant according to claim 1, **characterized in that** a retention tank **(38)** is placed above the upper tanks **(1),** said retention tank having discharge pipes **(39)** arranged above each upper tank **(1),** said discharge pipes **(39)** equipped with electrically controlled valves **(40)** coupled with upper tanks' **(1)** water level sensors **(15).**

## Patentansprüche

1. Ein Luft-Wasser-Kraftwerk ist mit Wasserturbinen ausgestattet, die mit Stromgeneratoren verbunden sind, sie besitzt einen Tief- und Hochbehälter verbunden mit einer Rohrleitung ausgestattet mit einer Pumpe, deren Rotor mit einem Windkraftwerk gekoppelt ist; **gekennzeichnet dadurch, dass** sie mindestens zwei Hochbehälter hat, **(1)** verbunden mit einem Kollektor **(4)** und mindestens eine Wasserturbine **(6)** verbunden mit einem Stromgenerator **(7),** überdies sind im Bodenteil der Hochbehälter (1) zwei Luftkissen vorhanden **(30)** die mit Hilfe einer Druckluftanlage **(28)** mit einem Luftbehälter verbunden sind **(24),** wobei das Windkraftwerk mindestens zwei Segmenttürme bilden **(17)** zusammengestellt aus mindestens zwei Segmenten **(18),** wobei die Transmissionswellen **(16)** der Türme **(17)** mit Pumpen verbunden sind, **(10)** die im Tiefbehälter platziert sind **(8).**

2. Ein Luft-Wasser-Kraftwerk gemäß Anspruch 1, **gekennzeichnet dadurch, dass** jedes Segment **(18)** des Turmes **(17)** mit einem Gitterwerk, das eine gegenseitige Verbindung ermöglicht, eine Windturbine **(19)** mit vertikaler Drehachse besitzt.

3. Ein Luft-Wasser-Kraftwerk gemäß Anspruch 2, **gekennzeichnet dadurch, dass** die Rotorenachsen der Windturbinen **(19)** an ihren Enden Übergangskupplungen besitzen **(19a).**

4. Ein Luft-Wasser-Kraftwerk gemäß Anspruch 1, **gekennzeichnet dadurch, dass** der Luftkompressor **(23),** dessen Ausgang über einen Luftbehälter **(24)** und eine Luftturbine **(25)** mit einem Stromgenerator **(26)** verbunden ist, über eine elektronisch gesteuerte Kupplung **(22)** mit einer Transmissionswelle **(16)** verbunden ist.

5. Ein Luft-Wasser-Kraftwerk gemäß Anspruch 1, **gekennzeichnet dadurch, dass** die Hochbehälter **(1)** mit mindestens zwei Pegelsensoren **(15)** ausgestattet sind.

6. Ein Luft-Wasser-Kraftwerk gemäß Anspruch 1, **gekennzeichnet dadurch, dass** zwischen den Hochbehältern **(1)** und dem Tiefbehälter **(8)** ein Zwischenbehälter liegt **(34),** der von der einen Seite über die Wasserzuleitung **(35)** mit der im Tiefbehälter (10) platzierten Pumpe verbunden ist (8), und von der anderen Seite ist der Zwischenbehälter **(34) -** über die Pumpe **(37)** und Wasserzuleitung **(36) -** mit einem Kollektor verbunden **(12),** der über den Hochbehältern platziert ist **(1).**

7. Ein Luft-Wasser-Kraftwerk gemäß Anspruch 5, **gekennzeichnet dadurch, dass** der Kollektor **(12)** Stutzen hat **(13),** die über jedem Hochbehälter platziert sind **(1).**

8. Ein Luft-Wasser-Kraftwerk gemäß Anspruch 5, **gekennzeichnet dadurch, dass** an den Stutzen **(13)** Elektroventile installiert sind **(14),** die mit Pegelsensoren **(15)** verbunden sind.

9. Ein Luft-Wasser-Kraftwerk gemäß Anspruch 5, **gekennzeichnet dadurch, dass** Hochbehälter (1), die mit dem Kollektor verbunden sind **(12),** der das Wasser der Rinne zuführt **(5),** über die die Wasserturbine gespeist ist **(6),** wobei die Reihenfolge und Zeit der Behälterbefüllung durch Sensoren gesteuert ist **(15),** deren Ausgänge mit Elektroventilen verbunden sind **(3).**

10. Ein Luft-Wasser-Kraftwerk gemäß Anspruch 1, **gekennzeichnet dadurch, dass** über den Hochbehältern **(1)** ein Speicherbehälter ist **(38),** der Ablassrohre **(39)** über jedem Hochbehälter hat **(1),** wobei die Ablassrohre **(39)** elektronisch gesteuerte Ventile haben **(40)** die mit den Pegelsensoren **(15)** in Hochbehältern (1) verbunden sind.

## Revendications

1. Une centrale de puissance hydro/aero équipée de turbines d'eau reliées aux générateurs d'électricité, comprenant un réservoir d'eau inférieur et un réservoir d'eau supérieur reliés à un pipeline ayant installée une pompe, le rotor de ladite pompe étant couplé à un générateur d'énergie éolienne, **caractérisée en ce qu'**elle comprend au moins deux réservoirs supérieurs (1) raccordé à un collecteur (4) et au moins une turbine à l'eau (6) reliée à un dispositif de génération d'énergie (7) et dans la partie inférieure desdits réservoirs supérieurs (1), des coussins d'air (30) sont disposés, lesdits coussins reliés par l'intermédiaire d'un système d'air (28) à un réservoir d'air (24), tandis que la centrale éolienne est constituée d'au moins deux colonnes segmentées (17), chacune assemblée d'au moins deux segments (18), tandis que des arbres de transmission (16) desdites colonnes (17) sont reliés à des pompes (10) reliées au réservoir inférieur (8).

2. La centrale de puissance hydro/aero selon la revendication 1, **caractérisée en ce que** chaque segment (18) d'une colonne (17) ayant un poutre en treillis pour relier les segments les uns aux autres, a une éolienne (19) à l'axe vertical.

3. La centrale de puissance hydro/aero selon la revendication 2, **caractérisée en ce que** les axes des rotors des éoliennes (19) comportent à leurs extrémités des demi-accouplements (19a).

4. La centrale de puissance hydro/aero selon la revendication 1, **caractérisée en ce qu'**un compresseur d'air (23) est relié à un arbre de transmission (16) par l'intermédiaire d'un accouplement à commande électrique (22), la sortie de ledit compresseur reliée par l'intermédiaire d'un réservoir d'air (24) et une turbine à l'air (25) à un générateur de puissance (26).

5. La centrale de puissance hydro/aero selon la revendication 1, **caractérisée en ce que** les réservoirs supérieurs (1) sont équipés d'au moins deux capteurs de niveau d'eau (15).

6. La centrale de puissance hydro/aero selon la revendication 1, **caractérisée en ce qu'**entre les réservoirs supérieurs (1) et le réservoir inférieur (8), un réservoir intermédiaire (34) est disposé, qui est relié d'un côté, par une section de pipeline (35) d'alimentation d'eau, à une pompe (10) située dans le réservoir inférieur (8), et de l'autre côté dudit réservoir intermédiaire (34) - par l'intermédiaire d'une pompe (37) et une section de pipeline (36) - est relié à un collecteur (12), placé au-dessus des réservoirs supérieurs (1).

7. La centrale de puissance hydro/aero selon la revendication 5, **caractérisée en ce que** le collecteur (12) comprend des embouts tubulaires (13) situés au-dessus de chaque réservoir supérieur (1).

8. La centrale de puissance hydro/aero selon la revendication 5, **caractérisée en ce que** les électrovannes (14) sont installées à embouts tubulaires (13), lesdittes vannes couplées à des capteurs de niveau d'eau (15).

9. La centrale de puissance hydro/aero selon la revendication 5, **caractérisée en ce que** les réservoirs supérieurs (1) sont reliés à un collecteur (12) qui fournit de l'eau à un conduit de descente (5) à travers lequel une turbine à l'eau (6) est disposée, alors que l'ordre de la séquence et le temps de remplissage des réservoirs supérieurs sont commandés par des capteurs (15) dont les sorties sont reliées aux électrovannes (3).

10. La centrale de puissance hydro/aero selon la revendication 1, **caractérisée en ce qu'**un réservoir de rétention (38) est placé au-dessus des réservoirs supérieurs (1), ledit réservoir de rétention ayant des conduites de décharge (39) disposés au-dessus de chaque réservoir supérieur (1), lesdites conduites de décharge (39) munis de soupapes à commande électrique (40) couplées aux capteurs de niveau d'eau (15) de réservoirs supérieurs (1).
